# EUROPEAN PATENT APPLICATION

(11) **EP 4 485 204 A1**
(43) Date of publication of application: **01.01.2025**
(21) Application number: 23818965.8
(22) Date of filing: 29.05.2023
(51) Int. Cl.: G06F 9/54

(54) **METHOD FOR CONTROLLING CROSS-DEVICE APPLICATION, AND ELECTRONIC DEVICE**

(30) Priority: 06.06.2022 CN 202210633664
(71) Applicant: Huawei Technologies Co., Ltd., Shenzhen, Guangdong 518129 (CN)
(72) Inventor: XIA, Yonglin, Shenzhen, Guangdong 518129 (CN)
(74) Representative: Isarpatent
(86) International application number: PCT/CN2023/096833
(87) International publication number: WO 2023/236800

(57) **Abstract**

This application provides a method for controlling a cross-device application. The method includes: An interconnected control device obtains application capability information of a plurality of devices, where the plurality of devices include a first device and a second device, and the application capability information includes at least one of an application sharing capability, an application receiving capability, or an application control capability. The interconnected control device receives a first operation from a user, where the first operation indicates the first device to perform application sharing with the second device. The interconnected control device sends group configuration information, where the group configuration information indicates the first device to perform application sharing with the second device. According to the technical solutions of this application, devices can be grouped based on a user's intention without modifying an existing application, and cross-device application management is supported.

## Description

This application claims priority to Chinese Patent Application No. 202210633664.6, filed with the China National Intellectual Property Administration on June 6, 2022 and entitled "METHOD FOR CONTROLLING CROSS-DEVICE APPLICATION AND ELECTRONIC DEVICE", which is incorporated herein by reference in its entirety.

### TECHNICAL FIELD

This application relates to the field of electronic devices, and more specifically, to a method for controlling a cross-device application and an electronic device.

### BACKGROUND

With popularization of electronic devices, each user usually has a plurality of electronic devices at the same time, including a mobile phone, a tablet, a smart screen, a personal computer (personal computer, PC), a smart speaker, a smart cockpit, and the like. The user may use an application across devices, for example, use a mobile phone application or a PC application on a large screen, or use a mobile phone application or a tablet application on the PC. For different device types, different interaction manners need to be used to operate an application. For example, touch interaction may be directly performed on the mobile phone, a remote control or the mobile phone needs to be used for controlling an application on the large screen, a mouse and a keyboard are used to operate the PC, and a steering wheel is used in a cockpit or a panel is directly used for touch interaction.

Currently, a plurality of applications on a same device may interact with each other through a message, a database, file sharing, or the like, but cross-device application sharing and interaction cannot be implemented. However, the user is not satisfied with operating and managing an application only on a single device. In addition, in a distributed multi-device interaction scenario, there is no method for grouping devices based on a user's intention and supporting cross-device application management.

### SUMMARY

This application provides a method for controlling a cross-device application and an electronic device, so that devices can be grouped based on a user's intention without modifying an existing application, and cross-device application management is supported.

According to a first aspect, a method for controlling a cross-device application is provided. The method includes: An interconnected control device obtains application capability information of a plurality of devices, where the plurality of devices include a first device and a second device, and the application capability information includes at least one of an application sharing capability, an application receiving capability, or an application control capability. After it is determined, based on the application capability information, that the first device can perform application sharing with the second device, a user may perform a first operation, and the interconnected control device receives the first operation from the user, where the first operation indicates the first device to perform application sharing with the second device. The interconnected control device sends group configuration information, where the group configuration information indicates the first device to perform application sharing with the second device.

According to the technical solutions of this application, devices can be grouped based on a user's intention without modifying an existing application, and cross-device application management is supported.

With reference to the first aspect, in some implementations of the first aspect, the method further includes: The interconnected control device displays a first interface. The first interface indicates an application that is allowed to be shared by the first device or the second device. In this way, a blacklist and a whitelist of applications that are allowed to be shared are displayed, to facilitate management of cross-device applications.

With reference to the first aspect, in some implementations of the first aspect, the second device has an application receiving capability, a third device has an application control capability, first group configuration information further indicates that the third device is a control device of the second device, and the third device is configured to control an application displayed on the second device.

With reference to the first aspect, in some implementations of the first aspect, the interconnected control device has an application sharing capability. The method further includes: The interconnected control device receives a second operation of the user, where the second operation indicates the interconnected control device to share an application with a fourth device, and the fourth device has an application receiving capability. The interconnected control device connects to the fourth device, and shares the application with the fourth device.

With reference to the first aspect, in some implementations of the first aspect, the interconnected control device has an application sharing capability. The method further includes: The interconnected control device connects to a fifth device, and displays an application shared by the fifth device. The fifth device has an application sharing capability.

According to a second aspect, a method for controlling a cross-device application is provided. The method includes: A first device receives group configuration information, where the group configuration information is generated by a user on an interconnected control device based on application capability information of the first device and a second device, the interconnected control device obtains application capability information of the first device and a third device from a server, and the application capability information includes at least one of an application sharing capability, an application receiving capability, or an application control capability. The first device connects to the second device based on the group configuration information, and the first device performs application sharing with the second device.

According to the technical solutions of this application, devices can be grouped based on a user's intention without modifying an existing application, and cross-device application management is supported.

With reference to the second aspect, in some implementations of the second aspect, the method further includes: The first device sends the application capability information of the first device to the server.

With reference to the second aspect, in some implementations of the second aspect, the first device has an application sharing capability, and the second device has an application receiving capability. The method further includes: The first device receives a first operation of the user, where the first operation indicates the first device to share an application with the second device. The first device shares the application with the second device.

With reference to the second aspect, in some implementations of the second aspect, the method further includes: The first device receives a second operation of the user, where the second operation indicates the first device to stop sharing the application with the second device. The first device stops sharing the application with the second device.

With reference to the second aspect, in some implementations of the second aspect, the first device further has an application control capability. The method further includes: The first device receives a third operation of the user, where the third operation indicates the first device to control the application shared with the second device.

According to a third aspect, an electronic device is provided, including an obtaining module and a processing module. The obtaining module is configured to obtain application capability information of a plurality of devices. The plurality of devices include a first device and a second device. The application capability information includes at least one of an application sharing capability, an application receiving capability, or an application control capability. The obtaining module is further configured to receive a first operation of a user, where the first operation indicates the first device to perform application sharing with the second device. The processing module is configured to generate group configuration information based on the first operation of the user. The group configuration information indicates the first device to perform application sharing with the second device. The obtaining module is further configured to send the group configuration information.

With reference to the third aspect, in some implementations of the third aspect, the processing module is further configured to display a first interface. The first interface indicates an application that is allowed to be shared by the first device or the second device.

With reference to the third aspect, in some implementations of the third aspect, a third device has an application control capability, first group configuration information further indicates that the third device is a control device of the second device, and the third device is configured to control an application displayed on the second device.

With reference to the third aspect, in some implementations of the third aspect, the interconnected control device has an application sharing capability. The obtaining module is further configured to receive a second operation of the user. The second operation indicates the interconnected control device to share an application with a fourth device. The fourth device has an application receiving capability. The processing module is further configured to connect to the fourth device and share an application with the fourth device.

With reference to the third aspect, in some implementations of the third aspect, the interconnected control device has an application sharing capability. The processing module is further configured to connect to a fifth device, and display an application shared by the fifth device. The fifth device has an application sharing capability.

According to a fourth aspect, an electronic device is provided, including a transceiver module and a processing module. The transceiver module is configured to receive group configuration information. The group configuration information is generated by a user on an interconnected control device based on application capability information of a first device and a second device. The interconnected control device obtains application capability information of the first device and a third device from a server. The application capability information includes at least one of an application sharing capability, an application receiving capability, or an application control capability. The processing module is configured to connect to the second device based on the group configuration information. The first device performs application sharing with the second device.

With reference to the fourth aspect, in some implementations of the fourth aspect, the transceiver module is further configured to send the application capability information of the first device to the server.

With reference to the fourth aspect, in some implementations of the fourth aspect, the first device has an application sharing capability, and the second device has an application receiving capability. The transceiver module is further configured to receive a first operation of the user. The first operation indicates the first device to share an application with the second device. The processing module is further configured to share the application with the second device.

With reference to the fourth aspect, in some implementations of the fourth aspect, the transceiver module is further configured to receive a second operation of the user. The second operation indicates the first device to stop sharing the application with the second device. The processing module is further configured to stop sharing the application with the second device.

With reference to the fourth aspect, in some implementations of the fourth aspect, the first device further has an application control capability. The transceiver module is further configured to receive a third operation of the user. The third operation indicates the first device to control the application shared with the second device.

According to a fifth aspect, a chip is provided. The chip includes a processor and a data interface. The processor reads, through the data interface, instructions stored in a memory, to perform the method in any one of the implementations of the first aspect and the second aspect.

Optionally, in an implementation, the chip may further include the memory. The memory stores the instructions. The processor is configured to execute the instructions stored in the memory. When the instructions are executed, the processor is configured to perform the method in any one of the implementations of the first aspect and the second aspect.

According to a sixth aspect, a computer program storage medium is provided. The computer-readable medium stores program code. When the computer program code is run on a computer, the computer is enabled to execute instructions of any one of the possible implementations of the first aspect and the second aspect.

According to a seventh aspect, a computer program product including instructions is provided. When the computer program product runs on a computer, the computer is enabled to perform the method in any one of the implementations of the first aspect and the second aspect.

According to an eighth aspect, an electronic device is provided, including modules configured to perform any one of the possible implementations of the first aspect and the second aspect.

According to a ninth aspect, a communication apparatus is provided, and is configured to perform the method according to any one of the possible implementations of the first aspect and the second aspect.

According to a tenth aspect, a communication apparatus is provided. The apparatus includes a processor and a memory. The processor is coupled to the memory. The memory is configured to store a computer program. The processor is configured to execute the computer program stored in the memory, so that the communication apparatus performs the method according to any one of the possible implementations of the first aspect and the second aspect.

According to an eleventh aspect, a communication apparatus is provided. The apparatus includes a processor, a memory, and a transceiver. The memory is configured to store a computer program. The processor is configured to execute the computer program stored in the memory, so that the apparatus performs the method according to any one of the possible implementations of the first aspect and the second aspect.

According to a twelfth aspect, a communication apparatus is provided. The communication apparatus includes at least one processor and a communication interface. The communication interface is used by the communication apparatus to exchange information with another communication apparatus. When program instructions are executed by the at least one processor, the communication apparatus is enabled to implement the method according to any one of the possible implementations of the first aspect and the second aspect.

According to a thirteenth aspect, a processor is provided. The processor includes at least one circuit, and is configured to perform the method according to any one of the possible implementations of the first aspect and the second aspect.

According to a fourteenth aspect, a chip system is provided. The chip system includes at least one processor. When program instructions are executed by the at least one processor, the chip system is enabled to implement the method according to any one of the possible implementations of the first aspect and the second aspect.

### BRIEF DESCRIPTION OF DRAWINGS

FIG. 1 is a schematic diagram of interaction between a plurality of applications in a current device;
FIG. 2 shows a current inter-device service access method;
FIG. 3 shows a system architecture to which a method for controlling a cross-device application is applicable according to an embodiment of this application;
FIG. 4 shows a specific implementation according to this application;
FIG. 5 is a schematic diagram of a hardware structure of an electronic device according to an embodiment of this application;
FIG. 6 is a schematic flowchart of a method for controlling a cross-device application according to an embodiment of this application;
FIG. 7 is a schematic flowchart of another method for controlling a cross-device application according to an embodiment of this application;
FIG. 8 is a schematic interaction diagram of a method for controlling a cross-device application according to an embodiment of this application;
FIG. 9 is a schematic diagram of a user interface of a method for controlling a cross-device application according to an embodiment of this application; and
FIG. 10 is a schematic diagram of a user interface of another method for controlling a cross-device application according to an embodiment of this application.

### DESCRIPTION OF EMBODIMENTS

The following describes technical solutions of this application with reference to accompanying drawings.

Terms used in the following embodiments are only intended to describe specific embodiments, but are not intended to limit this application. The terms "one", "a", "the", "the foregoing", "this", and "the one" of singular forms used in this specification and the appended claims of this application are also intended to include forms such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

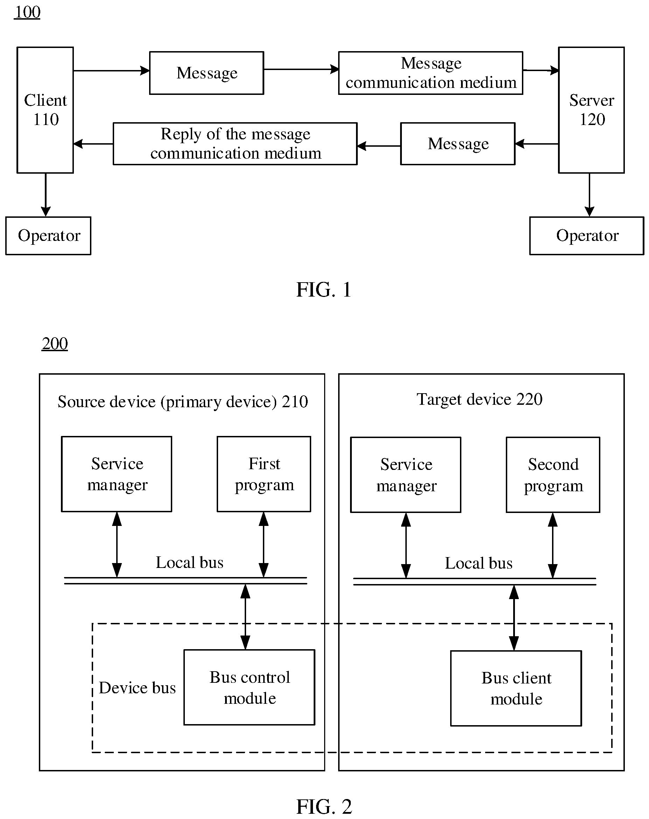

FIG. 1 is a schematic diagram of interaction between a plurality of applications in a current device.

As shown in FIG. 1, a server 120 communicates with a client 110 through a messenger (Messenger). The client 110 first binds the server, creates a messenger (Messenger) object based on a returned communication medium (Binder) object, and sends a message by using the object. To receive a result returned by the server 120, the client 110 also creates a messenger (Messenger) object and sends the messenger object to the server 120, and the server 120 sends a message to the client 110 by using the object.

According to the method, communication and interaction of a plurality of applications on a single device can be implemented, but management of applications across a plurality of devices is not supported, and a user cannot specify a device for application sharing and a device for application control based on an intention of the user.

FIG. 2 shows a current inter-device service access method.

As shown in FIG. 2, a service manager (service manager, SM) is deployed on both a source device (a primary device) and a target device. The service manager is responsible for generating a local service configuration item based on registration of a local application and providing a service query capability. For example, an application on the primary device registers a service of an application with a local service manager SM. Service information is transferred to the target device by using a device bus. After obtaining a service access interface, an application of the target device initiates a service request to request a service of the primary device.

However, the method depends on a fact that all applications register a service capability with a service manager SM of a device, and has a very high requirement on the application. In addition, the method does not support management of an application on each device, and does not support specifying a device for application sharing and a device for application control.

Based on the foregoing reasons, this application provides a method and an electronic device for controlling a cross-device application, so that devices can be grouped based on a user's intention without modifying an existing application, and cross-device application management is supported.

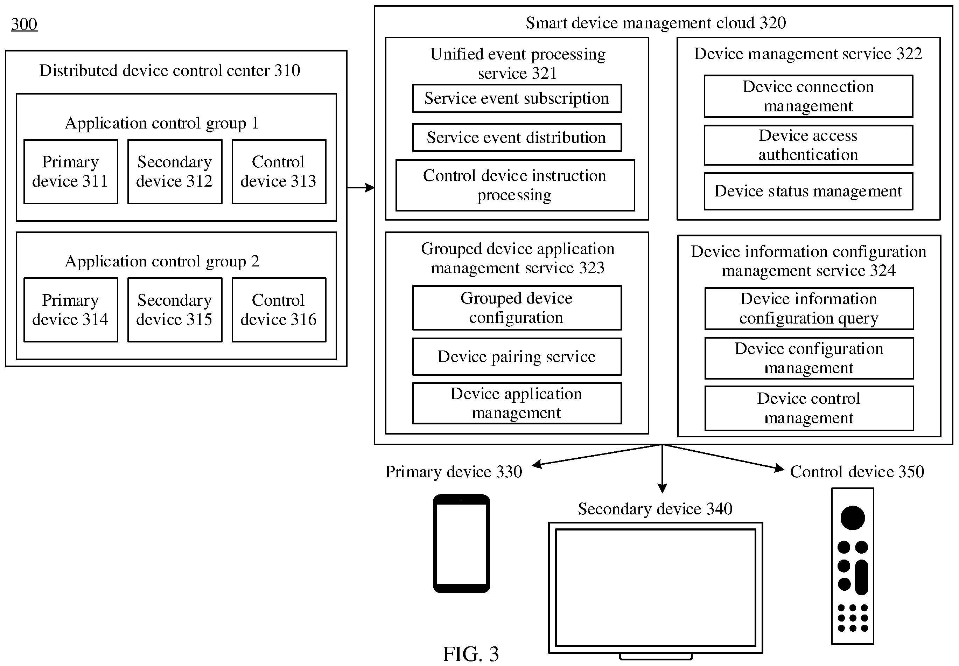

FIG. 3 shows a system architecture to which a method for controlling a cross-device application is applicable according to an embodiment of this application.

As shown in FIG. 3, the system architecture includes a distributed device control center 310, a smart device management cloud 320, a primary device 330, a secondary device 340, and a control device 350. The distributed device control center 310 supports group management across a plurality of devices. In each group, a primary device (source device) sharing an application, a target device receiving an application, and a control device matching operation and control of an application are specified. A group may include one or more primary devices, one or more secondary devices, and one or more control devices. The secondary device and the control device may be a same physical device. An application control group 1 and an application control group 2 are used as an example. The application control group 1 includes a primary device 311, a secondary device 312, and a control device 313, and the application control group 2 includes a primary device 314, a secondary device 315, and a control device 316. Although not shown in the figure, the application control group 1 or the application control group 2 may further include a primary device 317, a secondary device 318, a control device 319, and the like. The smart device management cloud 320 may include a unified event processing service 321, a device management service 322, a grouped device application management service 323, and a device information configuration management service 324. The unified event processing service 321 is used to provide a function of subscribing to a service event reported by a device, a function of distributing a service event, and a function of processing a control device instruction, and support delivery of an instruction of the control device to a specified device. The device management service 322 is used to manage a plurality of devices of a user, and support device connection management, device access authentication, and device status management on the plurality of devices. The grouped device application management service 323 is used to receive a grouping policy submitted by the distributed device control center 310, perform configuration management on a grouped device, provide a device pairing service, and support management and control of an application or content shared by the primary device. The device information configuration management service 324 is used to provide device information configuration query, device system configuration management, and device control management. The primary device 330, also referred to as a source device, is a device configured to provide a local application sharing capability, and supports reporting of local application capability information and service capability information to the smart device management cloud 322. The secondary device 340 is configured to receive an application or a service from the primary device, and may display content of the application or the service. The control device 350 is configured to match the secondary device 340, and the control device 350 is a device for operation and control of an application. The primary device 311 in the application control group 1 and the primary device 314 in the application control group 2 belong to or are the primary device 330. The secondary device 312 in the application control group 1 and the secondary device 315 in the application control group 2 belong to or are the secondary device 340. The control device 313 in the application control group 1 and the control device 316 in the application control group 2 belong to or are the control device 350.

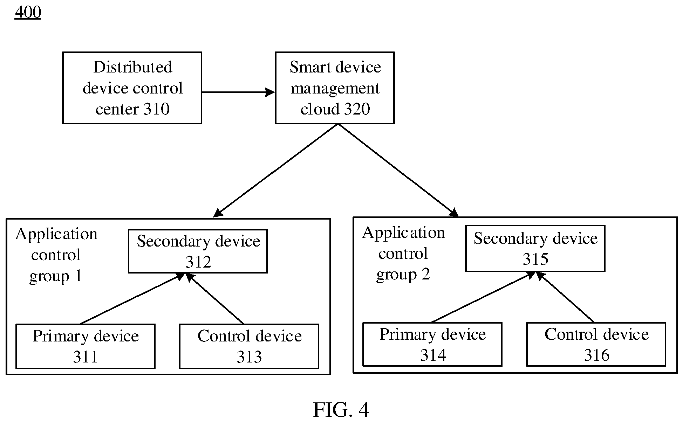

FIG. 4 shows a specific implementation according to this application. With reference to FIG. 4, a specific implementation provided in this application is described. Benefiting from guidance presented in the foregoing descriptions and related accompanying drawings, a person skilled in the art may figure out many improvements and other embodiments of this application. Therefore, it should be understood that this application is not limited to the disclosed specific embodiments.

A smart device management cloud 320 obtains application control group information from a distributed device control center 310. The application control group information may be set by a controller (for example, a user) in the distributed device control center 410. The application control group information may include an application group 1 (a primary device 311, a secondary device 312, and a control device 313) and an application group 2 (a primary device 314, a secondary device 315, and a control device 316). A primary device may also be referred to as a sending device, and a secondary device may also be referred to as a receiving device. The application group 1 is used as an example. The primary device 311 may be a mobile phone of a user, and an application runs on the mobile phone. The primary device 311 may be wirelessly connected to the secondary device 312, and the primary device 311 may send information such as an application icon, an application name, and a package name to the secondary device 312. The secondary device 312 may be a large display screen. When an application is displayed on the large display screen, an application interface supports adaptation to a receiving device screen, supports portrait-screen display, landscape-screen display, split-screen display, and the like, supports application management, and supports blacklist and whitelist management and control, and the like. The control device 313 may be a remote control board or a mobile phone, is responsible for operating and controlling an application, and supports a plurality of interaction manners such as a keystroke, a touch, and a slide.

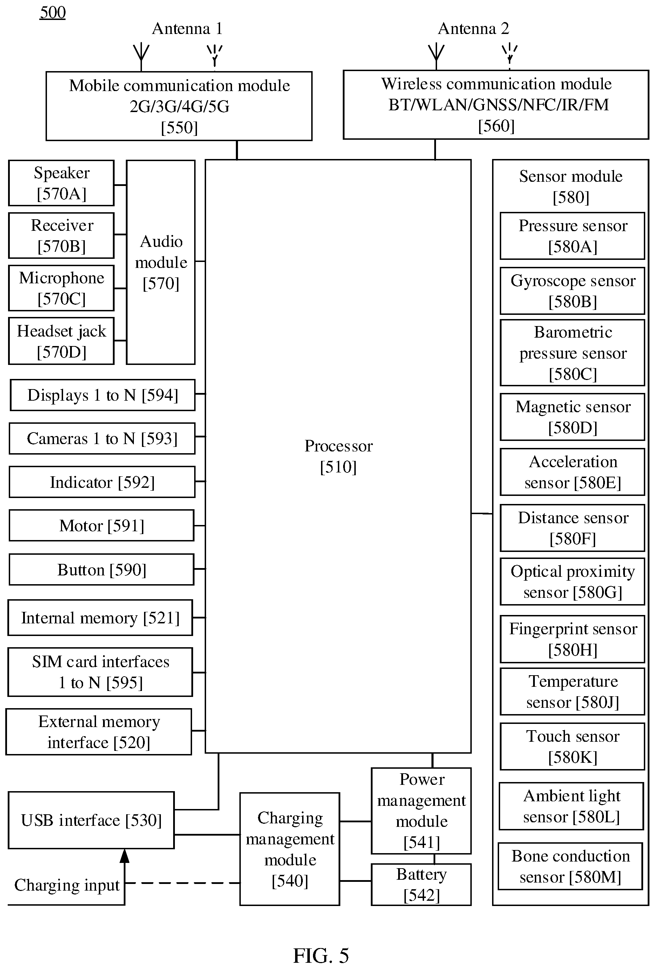

FIG. 5 is a schematic diagram of a hardware structure of an electronic device according to an embodiment of this application. An electronic device 500 shown in FIG. 5 is merely an example, and the electronic device 500 may have more or fewer components than those shown in the figure, may combine two or more components, or may have a different component configuration. Various components shown in the figure may be implemented in hardware, software, or a combination of hardware and software. The hardware, software, or the combination of hardware and software include one or more signal processing and/or application-specific integrated circuits.

The electronic device 500 may include: a processor 510, an external memory interface 520, an internal memory 521, a universal serial bus (universal serial bus, USB) interface 530, a charging management module 540, a power management module 541, a battery 542, an antenna 1, an antenna 2, a mobile communication module 550, a wireless communication module 560, an audio module 570, a speaker 570A, a receiver 570B, a microphone 570C, a headset jack 570D, a sensor module 580, a button 590, and a motor 591, an indicator 592, a camera 593, a display 594, a subscriber identity module (subscriber identification module, SIM) card interface 595, and the like. The sensor module 580 may include a pressure sensor 580A, a gyroscope sensor 580B, a barometric pressure sensor 580C, a magnetic sensor 580D, an acceleration sensor 580E, a distance sensor 580F, an optical proximity sensor 580G, a fingerprint sensor 580H, a temperature sensor 580J, a touch sensor 580K, an ambient light sensor 580L, a bone conduction sensor 580M, and the like.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be independent components, or may be integrated into one or more processors. In some embodiments, the electronic device 500 may alternatively include one or more processors 510. The controller may generate an operation control signal based on instruction operation code and a time sequence signal, to complete control of instruction fetching and instruction execution. In some other embodiments, a memory may be disposed in the processor 510, to store instructions and data. For example, the memory in the processor 510 may be a cache. The memory may store instructions or data that has been recently used or cyclically used by the processor 510. If the processor 510 needs to use the instructions or the data again, the processor may directly invoke the instructions or the data from the memory. This avoids repeated access and reduces a waiting time of the processor 510, thereby improving data processing or instruction execution efficiency of the electronic device 500.

In some embodiments, the processor 510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, and/or a USB interface, and the like. The USB interface is an interface that conforms to a USB standard specification, and may be specifically a mini USB interface, a micro USB interface, a USB Type C interface, or the like. The USB interface may be configured to connect to a charger to charge the electronic device 500, and may be configured to transmit data between the electronic device 500 and a peripheral device. The USB interface may alternatively be configured to connect to a headset, and play audio by using the headset.

It may be understood that, an interface connection relationship between the modules illustrated in this embodiment of this application is merely an example for description, and does not constitute a limitation on the structure of the electronic device 500. In some other embodiments of this application, the electronic device 500 may alternatively use an interface connection manner different from that in the foregoing embodiments, or use a combination of a plurality of interface connection manners.

A wireless communication function of the electronic device 500 may be implemented by using the antenna 1, the antenna 2, the mobile communication module 550, the wireless communication module 560, the modem processor, the baseband processor, and the like.

The antenna 1 and the antenna 2 are configured to transmit and receive an electromagnetic wave signal. Each antenna in the electronic device 500 may be configured to cover one or more communication bands. Different antennas may be further multiplexed, to improve antenna utilization. For example, the antenna 1 may be multiplexed as a diversity antenna in a wireless local area network. In some other embodiments, the antennas may be used in combination with a tuning switch.

The mobile communication module 550 may provide a wireless communication solution that includes 2G/3G/4G/5G or the like and that is applied to the electronic device 500. The mobile communication module 550 may include at least one filter, a switch, a power amplifier, a low noise amplifier (low noise amplifier, LNA), and the like. The mobile communication module 550 may receive an electromagnetic wave by using the antenna 1, perform processing such as filtering or amplification on the received electromagnetic wave, and transmit the electromagnetic wave to the modem processor for demodulation. The mobile communication module 550 may further amplify a signal modulated by the modem processor, and convert the signal into an electromagnetic wave for radiation by using the antenna 1. In some embodiments, at least some functional modules of the mobile communication module 550 may be disposed in the processor 510. In some embodiments, at least some functional modules of the mobile communication module 550 and as at least some modules of the processor 510 may be disposed in a same component.

The wireless communication module 560 may provide a wireless communication solution that is applied to the electronic device 500 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology, or the like. The wireless communication module 560 may be one or more devices integrating at least one communication processing module. The wireless communication module 560 receives an electromagnetic wave by using the antenna 2, performs frequency modulation and filtering processing on an electromagnetic wave signal, and sends a processed signal to the processor 510. The wireless communication module 560 may further receive a to-be-sent signal from the processor 510, perform frequency modulation and amplification on the signal, and convert the signal into an electromagnetic wave for radiation by using the antenna 2.

The electronic device 500 implements a display function by using the GPU, the display 594, the application processor, and the like. The GPU is a microprocessor for image processing, and is connected to the display 594 and the application processor. The GPU is configured to perform mathematical and geometric computation, and render an image. The processor 510 may include one or more GPUs that execute program instructions to generate or change display information.

The display 594 is configured to display an image, a video, or the like. The display 594 includes a display panel. In some embodiments, the electronic device 500 may include one or N displays 594, where N is a positive integer greater than 1.

The electronic device 500 may implement a photographing function by using the ISP, the camera 593, the video codec, the GPU, the display 594, the application processor, and the like. The camera 593 is configured to capture a static image or a video. An optical image of an object is generated by using a lens, and is projected onto a photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 500 may include one or N cameras 593, where N is a positive integer greater than 1.

The speaker 570A, also referred to as a "loudspeaker", is configured to convert an audio electrical signal into a sound signal. The electronic device 500 may listen to music or answer a hands-free call by using the speaker 570A.

The microphone 570C, also referred to as a "mike" or a "mic", is configured to convert a sound signal into an electrical signal.

In some embodiments, the electronic device may be a portable electronic device that further includes other functions such as a personal digital assistant function and/or a music player function. For example, the electronic device may be a mobile phone, a tablet computer, a wearable electronic device having a wireless communication function (for example, a smartwatch), a video player, a headset, a speaker, or a camera. An example embodiment of the portable electronic device includes but is not limited to a portable electronic device equipped with iOS^{®}, Android^{®}, Microsoft^{®}, or another operating system. The portable electronic device may alternatively be another portable electronic device, such as a laptop (Laptop). It should be further understood that, in some other embodiments, the foregoing electronic device may not be a portable electronic device but a desktop computer, a television, a speaker, a camera, or the like.

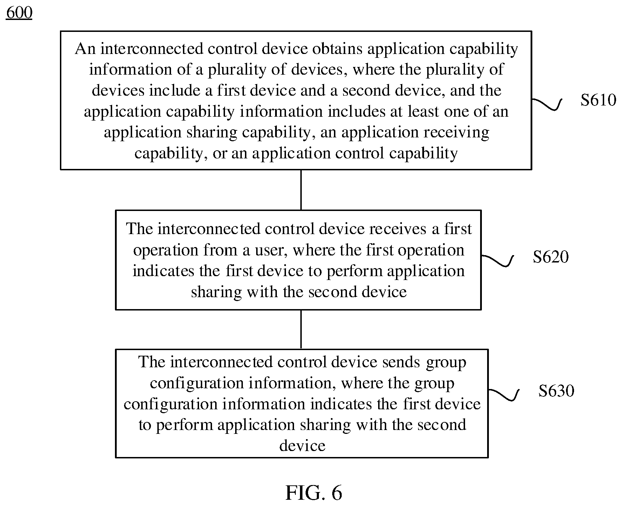

FIG. 6 is a schematic flowchart of a method for controlling a cross-device application according to an embodiment of this application.

S610: An interconnected control device obtains application capability information of a plurality of devices, where the plurality of devices include a first device and a second device, and the application capability information includes at least one of an application sharing capability, an application receiving capability, or an application control capability.

The interconnected control device includes a distributed control center, and the interconnected control device may obtain the application capability information of the plurality of devices from a server (for example, a smart device management cloud). The plurality of devices may actively register respective application capability information with or report respective application capability information to the server, or report respective application capability information based on an indication.

S620: The interconnected control device receives a first operation from a user, where the first operation indicates the first device to perform application sharing with the second device.

The user may view the application capability information of the plurality of devices on the interconnected control device, and configure a group based on the application capability information of the plurality of devices, to generate group configuration information. In the group configuration information, the user may specify one or more primary devices and one or more secondary devices. Optionally, the user may further specify one or more control devices that match the secondary devices.

S630: The interconnected control device sends the group configuration information, where the group configuration information indicates the first device to perform application sharing with the second device.

The interconnected control device may send the group configuration information to the server, and then the server separately sends the group configuration information to the plurality of devices in the group.

In this embodiment of this application, for a manner in which the first device performs application sharing with the second device, refer to the conventional technologies. This is not limited in this application.

According to the technical solutions of this application, devices can be grouped based on a user's intention without modifying an existing application, and cross-device application management is supported.

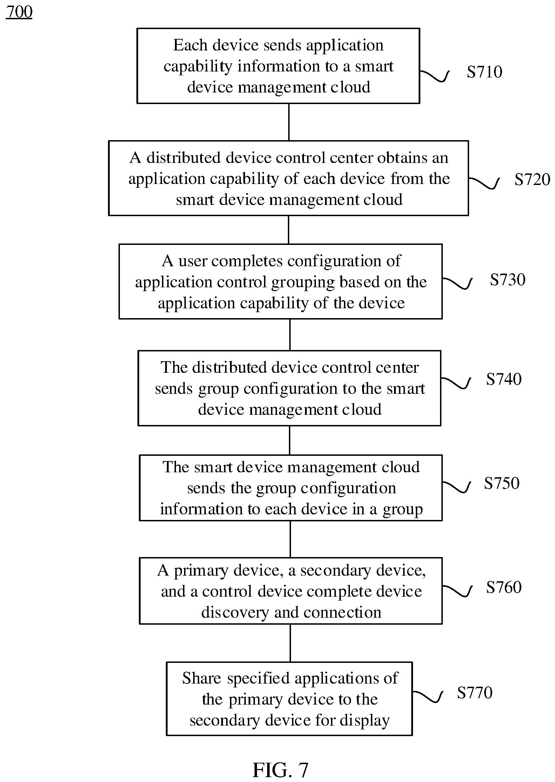

FIG. 7 is a schematic flowchart of another method for controlling a cross-device application according to an embodiment of this application.

S710: Each device sends application capability information to a smart device management cloud.

A smart home scenario is used as an example. Each device located at a home registers application capability information with or reports application capability information to a smart device management cloud (server). The application capability information includes but is not limited to an application sharing capability, an application receiving capability, and an application control capability.

S720: A distributed device control center obtains the application capability information of each device from the smart device management cloud.

S730: A user completes configuration of application control grouping based on an application capability of the device.

The user may view, in the distributed device control center, the application capability information registered or reported by each device, and configure a group based on the application capability information of the device, to obtain group configuration information. A primary device may be determined in the group configuration information, an application on the primary device is shared to a specified secondary device, and a control device is selected based on an application control capability of the secondary device for matching use. For example, it is specified that an application on a host A is shared to a large screen B for use. At the same time, a mobile phone C or a touchpad D is specified to connect to the large screen, and is used as a controller of the application.

Optionally, the distributed device control center may be located on an electronic device. The electronic device may be one of the foregoing plurality of devices, and may be used as a primary device, a secondary device, or a control device. This is not limited in this application.

S740: The distributed device control center sends the group configuration information to the smart device management cloud.

S750: The smart device management cloud sends the group configuration information to each device in the group.

The group configuration information may include a plurality of groups, for example, an application control group 1 and an application control group 2 shown in FIG. 4. Each group may further include a plurality of devices, for example, one or more sending devices, one or more receiving devices, and one or more control devices.

S760: The primary device, the secondary device, and the control device complete device discovery and connection.

The primary device, the secondary device, and the control device that are located in different groups may complete processes such as discovery, connection, and authentication between devices according to the conventional technologies.

S770: Share specified applications of the primary device to the secondary device for display.

The primary device may send indication information to the secondary device, where the indication information indicates to share the specified applications to the secondary device for display. The secondary device displays the specified applications based on the indication information. An application interface during running supports adaptation to a screen of the receiving device, supports portrait-screen display, landscape-screen display, split-screen display, and the like, supports application management, and supports blacklist and whitelist management and control. The blacklist and whitelist management and control may indicate that the secondary device may perform application display, application management, and the like on an application in the whitelist, and cannot perform application display and application management on an application in the blacklist.

According to the technical solutions of this application, devices can be grouped based on a user's intention without modifying an existing application, and cross-device application management is supported.

It should be understood that the foregoing solution may be implemented based on a HarmonyOS system. A distributed interconnection technology based on HarmonyOS supports device discovery, connection, and authentication, application data synchronization depends on a distributed data technology, application adaptation, application migration, and hardware migration capabilities depend on a collaborative configuration management service, and an application control capability depends on an adaptive application control service. Optionally, the foregoing solution may be implemented based on another system, for example, iOS^{®}, Android^{®}, Microsoft^{®}, or another operating system described above. This is not limited in this application.

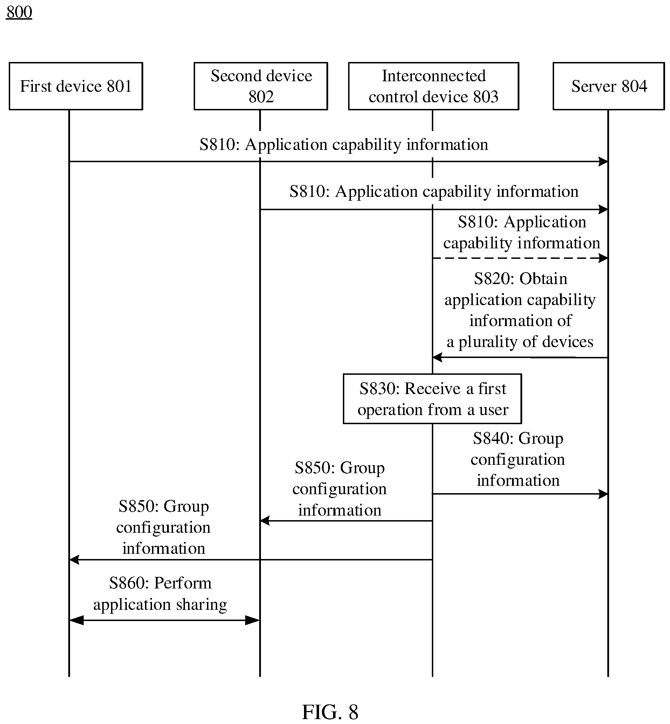

FIG. 8 is a schematic interaction diagram of a method for controlling a cross-device application according to an embodiment of this application.

S810: A first device 801 and a second device 802 send application capability information to a server 804.

The application capability information includes but is not limited to an application sharing capability, an application receiving capability, and an application control capability. The first device 801 and the second device 802 may actively register or send the application capability information with or to the server 804, or may register or send the application capability information with or to the server 804 based on the indication information.

Optionally, in an actual application scenario, a plurality of devices including the first device 801 and the second device 802 send the application capability information to the server 804. For example, an interconnected control device 803 may also send the application capability information to the server 804.

S820: The interconnected control device 803 obtains application capability information of a plurality of devices from the server 804.

In this embodiment of this application, the interconnected control device 803 may include a distributed device control center, and a user may view the application capability information of the plurality of devices in the distributed device control center. For example, the distributed device control center may group a plurality of devices and display the devices to the user, classify a device having an application sharing capability as a primary device into a group or a list, classify a device having an application receiving capability as a secondary device into a group or a list, and classify a device having an application control capability as a control device into a group or a list. One device may have both an application sharing capability and an application receiving capability. That is, the device may be used as a primary device of a first group and may be used as a secondary device of a second group. Alternatively, one device may have both an application receiving capability and an application control capability. That is, the device may be used as a secondary device of the first group and may be used as a control device of the first group or the second group. This is not limited in this application.

S830: The interconnected control device 803 receives a first operation from the user.

The user may perform, in the distributed device control center, the first operation based on application capabilities of a plurality of devices, where the first operation indicates the first device 801 to perform application sharing with the second device 802. That is, the first operation performed by the user in the distributed device control center generates group configuration information in which the first device 801 and the second device 802 may perform application sharing.

Further, when the first device 801 has an application sharing capability, and the second device 802 has an application receiving capability, the group configuration information may further indicate that the first device 801 is a primary device and the second device 802 is a secondary device.

Optionally, although not shown, when the plurality of devices include a third device, and the third device has an application control capability, the group configuration information may further indicate that the third device is a control device, and the third device is configured to control an application displayed on the second device 802.

S840: The interconnected control device 803 sends the group configuration information to the server 804.

S850: The server 804 separately sends the group configuration information to the first device 801 and the second device 802.

In this embodiment of this application, the server 804 may send group configuration information to a plurality of devices including the first device 801 and the second device 802, to indicate different groups of different devices. For example, the server 804 may send the group configuration information to the interconnected control device 803. The interconnected control device 803 may be located in a same group as the first device 801 and the second device 802, or may be located in a different group. This is not limited in this application.

S860: The first device 801 performs application sharing with the second device 802.

For application sharing between the first device 801 and the second device 802, refer to the conventional technologies. This is not limited in this application. For example, the first device 801 and the second device 802 may start application sharing after mutual discovery, connection, and authentication.

Optionally, the first device 801 receives the first operation of the user. The first operation indicates the first device 801 to share an application with the second device 802, and the first device 801 shares the application with the second device 802. It should be understood that the first operation performed by the user on the first device 801 is different from the first operation performed by the user on the distributed device control center.

Optionally, the first device 801 receives a second operation of the user. The second operation indicates the first device 801 to stop sharing the application with the second device 802, and the first device 801 stops sharing the application with the second device 802, to end application sharing between the first device 801 and the second device 802. In this embodiment of this application, the user may further perform a fourth operation on the control device, to end application sharing between the first device 801 and the second device 802.

Optionally, when the first device 801 further has an application control capability, the first device 801 receives a third operation of the user. The third operation indicates the first device 801 to control an application shared with the second device 802. In this case, the first device 801 may be in a state of not displaying an application, and is used as a control device to control an application shared with the second device 802.

It should be understood that the interconnected control device 803 may further display a first interface. The first interface indicates an application that is allowed to be shared by the first device 801 or the second device 802. In this way, a blacklist and a whitelist of applications that are allowed to be shared are displayed, to facilitate management of cross-device applications.

It should be further understood that the interconnected control device 803 may have an application sharing capability. In this case, the interconnected control device 803 may receive the second operation of the user. The second operation indicates the interconnected control device 803 to share an application with a fourth device, and the fourth device has an application receiving capability. The interconnected control device 803 connects to the fourth device, and shares an application with the fourth device. Alternatively, the interconnected control device 803 has an application sharing capability. In this case, the interconnected control device 803 is connected to a fifth device, and displays an application shared by the fifth device. The fifth device has an application sharing capability. The fourth device or the fifth device may be a same device as the first device 801 or the second device 802. This is not limited in this application.

According to the technical solutions of this application, devices can be grouped based on a user's intention without modifying an existing application, and cross-device application management is supported.

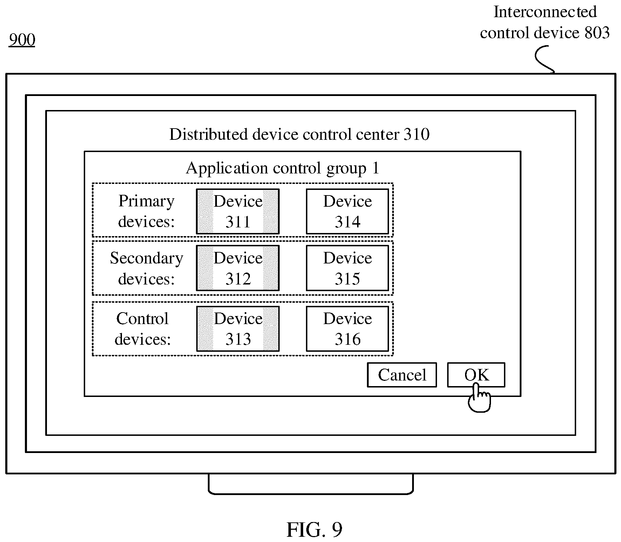

FIG. 9 is a schematic diagram of a user interface of a method for controlling a cross-device application according to an embodiment of this application.

As shown in FIG. 9, a user may view application capability information of a plurality of devices in a distributed application control center 310 of an interconnected control device 803. A device having an application sharing capability may be used as a device selection pool of a primary device, for example, a device 311 and a device 314 shown in FIG. 9. A device having an application receiving capability may be used as a device selection pool of a secondary device, for example, a device 312 and a device 315 shown in FIG. 9. A device having an application control capability may be used as a device selection pool of a control device, for example, a device 313 and a device 316 shown in FIG. 9. For example, a user performs a first operation to set an application control group 1. The user may select one device from the device 311 and the device 314 as a primary device, and select one device from the device 312 and the device 315 as a secondary device. Optionally, after the secondary device is selected, a device that can match the secondary device may be further selected from the control device 313 and the device 316 as a control device, to control an application shared on the secondary device. After the user selects the primary device, the secondary device, and the control device and taps OK, the application control group 1 may be generated. The application control group 1 includes the primary device 311, the secondary device 312, and the control device 313.

Application sharing between the first device 801 and the second device 802 in FIG. 8 may correspond to application sharing between the primary device 311 and the secondary device 312 in FIG. 9. When the first device 801 has an application sharing capability, and the second device 802 has an application receiving capability, the first device 801 is the primary device 311, and the second device 802 is the secondary device 312. When the first device 801 has an application receiving capability, and the second device 802 has an application sharing capability, the first device 801 is the secondary device 312, and the second device 802 is the primary device 311.

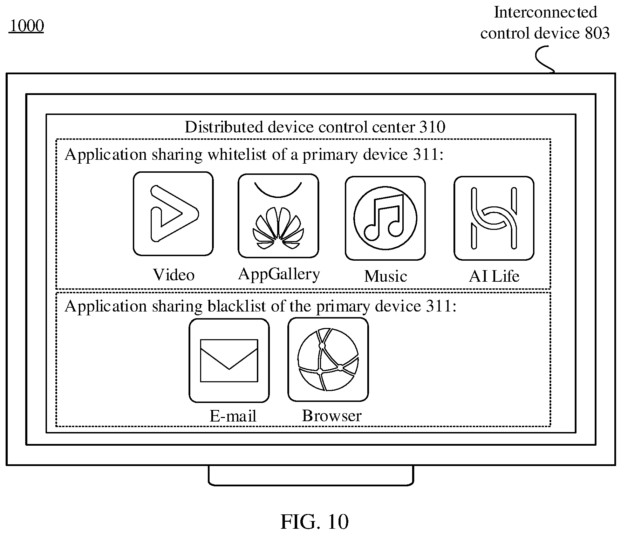

FIG. 10 is a schematic diagram of a user interface of another method for controlling a cross-device application according to an embodiment of this application.

As shown in FIG. 10, after a user selects a primary device (for example, the primary device 311 in FIG. 10), the user may view a first interface in a distributed application control center 310 of an interconnected control device 803. The first interface is used to display an application sharing whitelist (that is, applications that are allowed to be shared) and an application sharing blacklist (that is, applications that are not allowed to be shared) of the primary device 311. The application sharing blacklist and the application sharing whitelist of the primary device 311 may be actively set by the user, or may be automatically generated based on a device type. This is not limited in this application.

It should be understood that the foregoing example in which the first interface displays the application sharing blacklist and the application sharing whitelist of the primary device 311 is used to display the user interface, and should not be construed as a limitation on this application. When a primary device is another device (for example, a primary device 314), the first interface may further display an application sharing blacklist and an application sharing whitelist of the another device (for example, the primary device 314).

In embodiments provided in this application, it should be understood that the disclosed systems, apparatuses, and methods may be implemented in other manners. The described apparatus embodiments are merely examples. For example, a division of units is merely a logical function division. During actual implementation, another division manner may be used. For example, a plurality of units or components may be combined or integrated into another system, or some features may be ignored or may not be performed. In addition, the displayed or discussed mutual couplings or direct couplings or communication connections may be indirect couplings or communication connections by using some interfaces, apparatuses, or units, and may also be connection in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions in this application essentially, or the part contributing to the conventional technologies, or some of the technical solutions may be implemented in a form of a software product. A computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for controlling a cross-device application, comprising:
obtaining, by an interconnected control device, application capability information of a plurality of devices, wherein the plurality of devices comprise a first device and a second device, and the application capability information comprises at least one of an application sharing capability, an application receiving capability, or an application control capability;
receiving, by the interconnected control device, a first operation from a user, wherein the first operation indicates the first device to perform application sharing with the second device; and
sending, by the interconnected control device, group configuration information, wherein the group configuration information indicates the first device to perform application sharing with the second device.

2. The method according to claim 1, wherein the method further comprises:
displaying, by the interconnected control device, a first interface, wherein the first interface indicates an application that is allowed to be shared by the first device or the second device.

3. The method according to claim 1 or 2, wherein the second device has an application receiving capability, a third device has an application control capability, first group configuration information further indicates that the third device is a control device of the second device, and the third device is configured to control an application displayed on the second device.

4. The method according to any one of claims 1 to 3, wherein the interconnected control device has an application sharing capability; and the method further comprises:
receiving, by the interconnected control device, a second operation of the user, wherein the second operation indicates the interconnected control device to share an application with a fourth device, and the fourth device has an application receiving capability; and
connecting, by the interconnected control device, to the fourth device, and sharing the application with the fourth device.

5. The method according to any one of claims 1 to 3, wherein the interconnected control device has an application sharing capability; and the method further comprises:
connecting, by the interconnected control device, to a fifth device, and displaying an application shared by the fifth device, wherein the fifth device has an application sharing capability.

6. A method for controlling a cross-device application, comprising:
receiving, by a first device, group configuration information, wherein the group configuration information is generated by a user on an interconnected control device based on application capability information of the first device and a second device, the interconnected control device obtains application capability information of the first device and a third device from a server, and the application capability information comprises at least one of an application sharing capability, an application receiving capability, or an application control capability; and
connecting, by the first device, to the second device based on the group configuration information, and performing, by the first device, application sharing with the second device.

7. The method according to claim 6, wherein the method further comprises:
sending, by the first device, the application capability information of the first device to the server.

8. The method according to claim 6 or 7, wherein the first device has an application sharing capability, and the second device has an application receiving capability; and the method further comprises:
receiving, by the first device, a first operation of the user, wherein the first operation indicates the first device to share an application with the second device; and
sharing, by the first device, the application with the second device.

9. The method according to claim 8, wherein the method further comprises:
receiving, by the first device, a second operation of the user, wherein the second operation indicates the first device to stop sharing the application with the second device; and
stopping, by the first device, sharing the application with the second device.

10. The method according to any one of claims 6 to 9, wherein the first device further has an application control capability; and the method further comprises:
receiving, by the first device, a third operation of the user, wherein the third operation indicates the first device to control the application shared with the second device.

11. An electronic device, wherein the communication apparatus comprises a processor and a memory, and is configured to perform the method according to any one of claims 1 to 10.
